# FASCICULE DE BREVET EUROPEEN

(11) **EP 3 559 430 B1**
(45) Date de publication et mention de la délivrance du brevet: **18.11.2020**
(21) Numéro de dépôt: 17825906.5
(22) Date de dépôt: 15.12.2017
(51) Int. Cl.: F02C 7/236

(54) **PROCÉDÉ AMÉLIORÉ DE RÉGULATION D'UN CIRCUIT D'ALIMENTATION**
VERBESSERTES VERFAHREN ZUR REGELUNG EINER SPEISESCHALTUNG
IMPROVED METHOD FOR REGULATING A SUPPLY CIRCUIT

(30) Priorité: 22.12.2016 FR 1663128
(43) Date de publication de la demande: 30.10.2019
(73) Titulaire: Safran Aircraft Engines, 75015 Paris (FR)
(72) Inventeur: TOMOV, Petar, 77550 Moissy-Cramayel (FR); VERTENOEUIL, Philippe, 77550 Moissy-Cramayel (FR)
(74) Mandataire: Cabinet Beau de Loménie
(86) Numéro de dépôt international: PCT/FR2017/053599
(87) Numéro de publication internationale: WO 2018/115653

(56) Documents cités:
- EP-A1- 0 107 572
- WO-A1-2013/017795
- FR-A1- 2 268 956

## Description

### DOMAINE DE L'INVENTION

La présente invention concerne le domaine des circuits d'alimentation carburant pour moteur, et notamment pour turbomachines, et concerne plus particulièrement un procédé de régulation d'un circuit d'alimentation ainsi qu'un tel circuit d'alimentation, dans lequel s'écoule un écoulement diphasique.

La présente invention peut notamment être utilisée pour un turboréacteur d'avion.

### ETAT DE LA TECHNIQUE ANTERIEURE

Les moteurs d'avions comportent classiquement des circuits d'alimentation en carburant, prélevant du carburant dans des réservoirs situés généralement dans les ailes de l'avion. Au cours de son trajet depuis ces réservoirs jusqu'au moteur, le carburant s'écoule tout d'abord dans une conduite issue de ces réservoirs et appartenant à l'avion puis dans une conduite appartenant au circuit d'alimentation du moteur. La jonction entre ces deux conduites constitue donc une interface entre l'avion et le moteur. Par ailleurs, les circuits d'alimentation de ces moteurs comportent un équipement de pompage permettant de pressuriser le carburant avant son alimentation dans la chambre de combustion. Cet équipement de pompage comporte généralement deux étages : une pompe BP (basse pression), et une pompe HP (haute pression). La pompe BP est généralement une pompe centrifuge avec rouet à aubages, dont le bon fonctionnement dépend fortement de sa bonne alimentation en carburant. En particulier, ce type de pompe étant prévu pour fonctionner avec des fluides en phase liquide, la présence de gaz dans l'écoulement de carburant risque d'altérer le bon fonctionnement de la pompe.

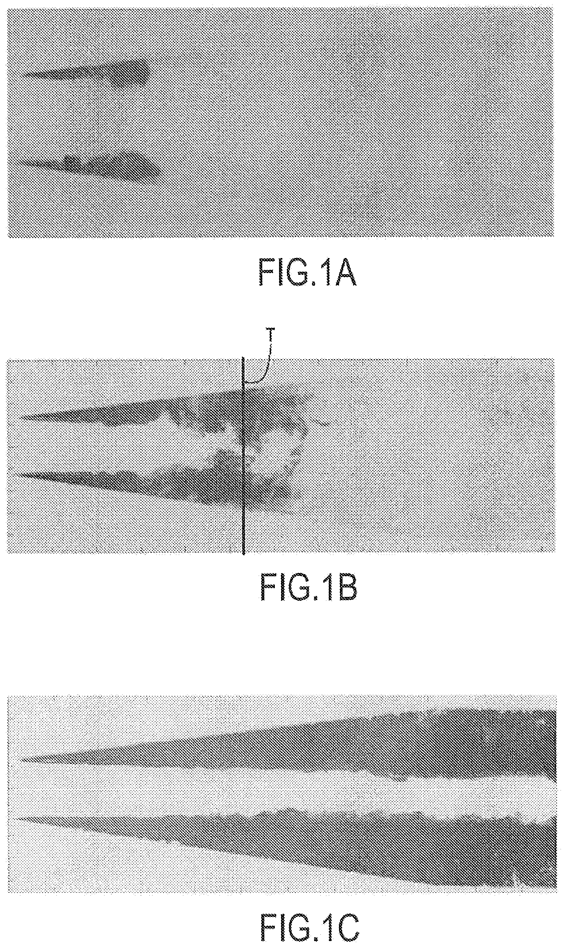

Or, lors de la fabrication d'un moteur, les motoristes ne connaissent pas nécessairement précisément les conditions de fonctionnement auxquelles ce moteur sera soumis en vol et, en particulier, ne connaissent pas nécessairement les détails de conception des réservoirs et des canalisations carburant de l'avion. Inversement, les avionneurs ne connaissent pas nécessairement le type de moteur qui sera utilisé sur un avion donné, plusieurs modèles de moteurs étant généralement compatibles pour un même modèle d'avion. Il en résulte une méconnaissance des conditions d'écoulement existant à l'interface entre l'avion et le moteur. Or, en fonction de la configuration de l'avion et de ses conditions d'utilisation (géométrie des canalisations, altitude, type de carburant, température...), les caractéristiques de l'écoulement à cette interface peuvent être perturbées. Les conséquences peuvent être notamment le dégazage, ou encore la cavitation, ainsi que le couplage des deux phénomènes qui apparaissent lorsque la pression de l'écoulement devient trop faible. Les écoulements diphasiques ainsi obtenus comportent alors des microbulles, des bulles ou des poches complètes de gaz risquant de perturber le fonctionnement de la pompe BP, voire de l'endommager de manière irrémédiable, et ainsi d'induire des dysfonctionnements du moteur. A ce titre, la figure 1, présentant l'écoulement d'un fluide observé sur un banc d'essai, illustre différents modes de cavitation, notamment :
- Un mode de cavitation par poches (figure 1A.), correspondant à un faible débit d'écoulement et une pression d'écoulement relativement haute. Ce mode se caractérise par un écoulement relativement statique, avec des poches de cavitations (poches de gaz) stables, ces dernières restant localisées à l'interface entre l'avion et le moteur (modélisé par le col d'un venturi avec des parties divergentes, qui peuvent être vu comme les extrados des aubages), de sorte qu'elles ne se déplacent pas dans la canalisation et qu'elles n'atteignent pas la pompe. De manière générale, ce type de cavitation peut être également formé sur les extrados des aubages des pompes.
- Un mode de cavitation tourbillonnaire (figure 1B.), correspondant à un débit d'écoulement plus élevé et une pression plus faible que dans le mode de cavitation par poches. Ce mode est caractérisé par une forte vorticité, un écoulement très dynamique où les poches de cavitations se détachent de manière synchronisée à une fréquence bien définie en se déplaçant de haut en bas de la section de la canalisation suivant l'écoulement.

Ces régimes d'écoulement cavitants peuvent être nuisibles au bon fonctionnement de la pompe, et donc du moteur. En effet, dans ces types de régimes, la pompe BP peut être ponctuellement alimentée par un fluide essentiellement sous phase gazeuse. La ligne verticale T sur la figure 1B montre une section dans laquelle l'écoulement est presqu'entièrement gazeux. Cette configuration peut notamment mener au désamorçage de la pompe, ou encore donner lieu à des vibrations, ainsi qu'à l'apparition d'un phénomène de pompage pouvant endommager la pompe.

Afin d'éviter ces types de régimes d'écoulements, il serait nécessaire de simuler et donc de spécifier correctement les conditions d'alimentation du carburant au niveau de l'interface entre l'avion et le moteur au cours du vol. Or, comme cela a été évoqué ci-dessus, les motoristes disposent rarement des informations suffisantes, notamment en ce qui concernant la configuration exacte de l'avion, pour rendre possibles de telle simulations. Par conséquent, les solutions actuelles visant à éviter ces régimes d'écoulements se contentent de limiter le domaine de vol afin d'éviter tout risque d'avoir une pression trop faible (favorisant le phénomène de cavitation) au niveau de l'interface entre l'avion et le moteur, ou encore surdimensionnent la pompe BP, ce qui a pour conséquence d'augmenter inutilement la masse de l'avion.

Le document EP0107572 divulgue un système de régulation d'un circuit d'alimentation. Le document WO2013/017795 divulgue un capteur pour déterminer la teneur en gaz dans un écoulement.

Il existe donc un besoin pour un procédé de régulation d'un circuit d'alimentation, ainsi qu'un circuit d'alimentation, permettant d'éviter certains régimes d'écoulement nocifs au bon fonctionnement du moteur et qui soient dépourvus, au moins en partie, des inconvénients inhérents aux méthodes connues précitées.

### PRESENTATION DE L'INVENTION

Le présent exposé concerne un procédé de régulation d'une alimentation pour un circuit comprenant au moins une première pompe et une canalisation amont menant à la première pompe, le procédé comportant des étapes de :
- détermination, dans la canalisation amont, de la teneur en gaz d'un écoulement alimentant la première pompe ;
- lorsque que la valeur de la teneur en gaz dans la canalisation amont, déterminée à l'étape de détermination, est supérieure ou égale à une valeur seuil prédéterminée, modification du débit de l'écoulement alimentant la première pompe.

Dans le présent exposé, l'écoulement peut être un écoulement d'un liquide, ou un écoulement diphasique, c'est-à-dire un écoulement d'un fluide comportant une phase liquide et une phase gazeuse comportant la vapeur du liquide et de l'air initialement dissous dans le liquide, les termes « amont » ou « aval », sont compris suivant le sens d'écoulement du fluide.

Par « teneur en gaz », on comprend la proportion totale volumique de la phase gazeuse dans l'ensemble du fluide sur une portion de la canalisation amont. Par conséquent, la valeur seuil prédéterminée correspond à une proportion en phase gazeuse prédéterminée. La valeur seuil peut être déterminée de sorte à correspondre à l'apparition d'un régime d'écoulement particulier, correspondant par exemple à un mode de cavitation particulier, notamment tourbillonnaire. Ainsi, l'étape de détermination permet de détecter l'apparition d'un tel régime d'écoulement en amont de la première pompe.

En outre, par « modification du débit de l'écoulement», on comprend l'augmentation ou la diminution du débit massique de fluide alimentant la première pompe. Ainsi, lorsqu'un régime de cavitation tourbillonnaire a été détecté à l'étape de détermination, le débit massique de fluide alimentant la première pompe est modifié. Cette modification de débit entraîne une modification de la pression en amont de la première pompe, et donc un changement de régime d'écoulement. Grâce à ce procédé, il est donc possible d'éviter des régimes d'écoulements correspondant à un mode de cavitation tourbillonnaire pouvant nuire au fonctionnement du moteur, en détectant l'apparition de tels régimes et en modifiant simplement le débit de l'écoulement sans qu'il soit nécessaire, dans le cas d'un moteur d'avion, de limiter le domaine de vol. Par ailleurs, un tel procédé permet de se dispenser de surdimensionner la pompe, ce qui permet donc d'éviter d'augmenter sa masse et son encombrement.

Dans certains modes de réalisation, lorsque que la valeur de la teneur en gaz déterminée à l'étape de détermination est supérieure ou égale à la valeur seuil prédéterminée, le débit de l'écoulement alimentant la première pompe est augmenté.

Dans certains modes de réalisation, lorsque que la valeur de la teneur en gaz déterminée à l'étape de détermination est supérieure ou égale à la valeur seuil prédéterminée, le débit de l'écoulement alimentant la première pompe est augmenté de sorte à obtenir un régime de « supercavitation » dans la canalisation amont.

La détection, à l'étape de détermination, d'une valeur de la teneur en gaz supérieure ou égale à la valeur seuil prédéterminée est caractéristique de la présence d'un mode de cavitation présentant des risques pour la pompe, par exemple un mode de cavitation tourbillonnaire. Le mode de cavitation tourbillonnaire constitue généralement le régime d'écoulement le plus nuisible à la pompe, au bon fonctionnement de celle-ci et donc du moteur, compte tenu de son caractère instable. En effet, dans ce type de régime, la pompe BP peut être ponctuellement alimentée par un fluide essentiellement sous phase gazeuse. Cette configuration peut notamment mener au désamorçage de la pompe et à l'endommagement de celle-ci.

Or, l'augmentation du débit d'écoulement entraîne une diminution de la pression dudit écoulement, cette diminution de pression ayant pour effet d'accentuer le phénomène de cavitation, déjà présent dans la canalisation amont, pour atteindre un mode de cavitation dit « supercavitation », correspondant à un débit d'écoulement plus élevé et une pression d'écoulement plus faible que dans le mode de cavitation tourbillonnaire. Cette augmentation de débit est effectuée de sorte à obtenir volontairement un régime de « supercavitation » dans la canalisation amont. En effet, comme cela est illustré sur la figure 1C, ce régime se caractérise par un phénomène de cavitation plus localisé et « stationnaire » du point de vue dynamique de l'écoulement. Plus précisément, la phase liquide s'écoule sous la forme d'un jet de section sensiblement circulaire, dont le diamètre reste sensiblement constant le long de la canalisation. Ainsi, le gaz généré reste dans des zones précises de la canalisation, dans un écoulement annulaire entre ledit écoulement liquide et la paroi de la canalisation. Par conséquent, la circulation de gaz est plus stable, et donc moins néfaste au bon fonctionnement de la première pompe.

Dans certains modes de réalisation, l'augmentation du débit de l'écoulement alimentant la première pompe est supérieure à 2%.

Cette augmentation du débit massique de l'écoulement d'au moins 2% par rapport au débit initial permet, dans la plupart des applications, de passer d'un régime tourbillonnaire à un régime de supercavitation.

Dans certains modes de réalisation, l'augmentation du débit de l'écoulement alimentant la première pompe est inférieure à 15%, de préférence inférieure à 10%, de préférence encore inférieure à 5%.

Des augmentations de faibles amplitudes du débit de l'écoulement alimentant la première pompe peuvent ainsi être suffisantes, dans la plupart des applications, pour passer d'un régime tourbillonnaire à un régime de « supercavitation ». On évite ainsi d'affecter de manière trop importante le fonctionnement du moteur.

Dans certains modes de réalisation, le circuit comprend une canalisation aval en aval de la première pompe, et au moins un premier canal de dérivation connecté en dérivation de la canalisation aval et permettant de prélever une certaine quantité de fluide dans la canalisation aval, la modification du débit de l'écoulement alimentant la première pompe étant réalisée en modifiant une quantité de fluide prélevé dans la canalisation aval via le premier canal de dérivation.

La canalisation aval est la canalisation par laquelle le fluide provenant de la première pompe s'écoule. Le canal de dérivation peut être un canal connecté de manière transversale à la canalisation. Des moyens permettent de prélever une certaine quantité de fluide s'écoulant dans la canalisation aval via ce canal de dérivation. La modification du débit de l'écoulement alimentant la première pompe peut ainsi être réalisée par une simple modification de la quantité de fluide prélevé dans la canalisation aval au moins via ce premier canal de dérivation.

Dans certains modes de réalisation, l'augmentation du débit de l'écoulement alimentant la première pompe est réalisée en diminuant la quantité de fluide prélevé dans la canalisation aval au moins via le premier canal de dérivation.

Dans certains modes de réalisation, la détermination de la teneur en gaz de l'écoulement est effectuée par un mesureur de phases apte à déterminer la teneur en gaz d'un écoulement diphasique, disposé dans la canalisation amont.

Dans certains modes de réalisation, le mesureur de phases comporte une pluralité d'électrodes concentriques, le mesureur de phases étant configuré pour, en mesurant la capacité électrique entre les électrodes concentriques, déterminer la teneur en gaz dans la canalisation.

Le mesureur de phases peut comporter un cylindre externe à l'intérieur duquel sont disposées une pluralité d'électrodes cylindriques et concentriques entre elles et avec le cylindre externe. Le fluide s'écoulant dans la canalisation s'écoule à l'intérieur du cylindre externe, le long de ces électrodes. Les électrodes permettent de mesurer une capacité électrique dont la valeur est représentative de la teneur en gaz du fluide s'écoulant dans le mesureur. Un mesureur de phase de ce type est décrit plus en détail dans le brevet français FR 2 978 828. Le fait de connaître ce paramètre en temps réel présente l'avantage de pouvoir modifier le régime d'écoulement, en modifiant le débit de l'écoulement, immédiatement lorsque la valeur de la teneur en gaz atteint la valeur seuil.

Dans certains modes de réalisation, la modification de la quantité de fluide prélevé en aval de la première pompe est effectuée en régulant l'ouverture d'une vanne de prélèvement prévue sur le premier canal de dérivation.

Le moyen permettant de prélever une certaine quantité de fluide s'écoulant dans la canalisation aval via le canal de dérivation peut être une simple vanne de prélèvement. Le degré d'ouverture de ladite vanne permet de réguler la quantité de fluide s'écoulant dans le canal de dérivation, et donc la quantité de fluide prélevé dans la canalisation aval.

Dans certains modes de réalisation, une unité de commande compare la valeur de la teneur en gaz déterminée par le mesureur de phases avec la valeur critique prédéterminée et, en fonction du résultat de cette comparaison, commande un degré d'ouverture de la vanne de prélèvement.

L'unité de commande peut être une unité de commande électronique ('ECU' pour Electronic Control Unit). L'unité de commande permet de modifier le régime d'écoulement de manière autonome, en commandant l'ouverture de la vanne de prélèvement en fonction d'une valeur de la teneur en gaz transmise par le mesureur de phases.

Dans certains modes de réalisation, un diamètre externe du mesureur de phases est égal à un diamètre externe de la canalisation amont.

En d'autres termes, le cylindre externe a un diamètre égal au diamètre externe de la canalisation amont. Cela permet de ne pas créer de discontinuité dans la géométrie de la canalisation amont.

Dans certains modes de réalisation, les bords d'attaques et de fuites des électrodes concentriques du mesureur de phases sont optimisés de sorte à limiter les pertes de charge dans l'écoulement.

Les bords d'attaques peuvent par exemple être biseautés afin de limiter les pertes de charge dans l'écoulement.

Dans certains modes de réalisation, l'écoulement est un écoulement de carburant pour turbomachine comportant une phase liquide et une phase gazeuse.

Le procédé de régulation permet donc de réguler l'alimentation en carburant de la turbomachine.

Dans certains modes de réalisation, le circuit d'alimentation comporte la première pompe, et une deuxième pompe en aval de la première pompe, les première et deuxième pompes étant reliées par la canalisation aval.

Le circuit d'alimentation appartient à la turbomachine. La première pompe peut être une pompe BP (basse pression), et la deuxième pompe peut être une pompe HP (haute pression).

Dans certains modes de réalisation, le circuit d'alimentation comporte au moins un échangeur de chaleur disposé entre la première pompe et la deuxième pompe, le premier canal de dérivation étant branché en dérivation entre la première pompe et l'échangeur, et un deuxième canal de dérivation branché en dérivation sur la canalisation aval entre l'échangeur et la deuxième pompe.

L'échangeur de chaleur peut être un échangeur de chaleur huile/carburant ou air/carburant. Il permet de réguler la température de l'écoulement de carburant avant son injection dans le moteur. Le deuxième canal de dérivation peut être analogue au premier canal de dérivation. Une vanne de prélèvement peut être prévue sur le premier canal de dérivation et/ou sur le deuxième canal de dérivation. Le premier canal de dérivation et le deuxième canal de dérivation permettent ainsi de prélever un mélange de carburant respectivement en amont et en aval de l'échangeur, ce qui permet, après mélange, de réguler la température du carburant prélevé. Ces différents éléments sont habituellement présents dans les circuits d'alimentation des turbomachines. Ainsi, dans le cadre du présent exposé, les premier et/ou deuxième canaux de dérivation permettent de modifier le débit de l'écoulement dans la canalisation amont en modifiant la quantité de fluide prélevé dans la canalisation aval. Ce mode de prélèvement permet ainsi de modifier le régime de l'écoulement dans la canalisation amont en utilisant des éléments déjà présents traditionnellement dans de tels circuits d'alimentation. Par conséquent, il n'est pas nécessaire d'utiliser un dispositif supplémentaire permettant de modifier le débit de l'écoulement alimentant la première pompe, ce qui permet de ne pas alourdir le moteur.

Dans certains modes de réalisation, le carburant servant à alimenter la turbomachine est prélevé dans un réservoir appartenant à un véhicule, de préférence un aéronef.

Dans certains modes de réalisation, le carburant prélevé par le premier et/ou le deuxième canal de dérivation est acheminé en retour jusqu'audit réservoir.

Le carburant circule ainsi entre le réservoir et la turbomachine en formant une boucle de circulation.

Dans certains modes de réalisation, le mesureur de phases est disposé en aval de l'interface entre le véhicule et la turbomachine.

En d'autres termes, le mesureur de phases est disposé dans la canalisation amont entre l'interface séparant le véhicule et la turbomachine et la première pompe, c'est-à-dire à l'entrée de la canalisation amont. Cette position du mesureur de phase lui permet de mesurer la teneur en gaz directement en aval de l'interface, ce qui permet de détecter les perturbations d'écoulement engendrées à l'interface, et la présence éventuelle de cavitation tourbillonnaire.

Dans certains modes de réalisation, la valeur seuil de la teneur en gaz est comprise entre 50% et 80%.

Une valeur de teneur en gaz comprise dans cette plage de valeurs peut être caractéristique de la présence d'un régime de cavitation tourbillonnaire dans l'écoulement.

Dans certains modes de réalisation, la modification du débit de l'écoulement alimentant la première pompe est effectuée lorsque le mesureur de phases mesure une variation d'au moins 5%, de préférence 10%, de préférence encore 15%, dans la teneur en gaz en moins de 1 seconde.

Les modes de cavitation stables, tels que la cavitation par poches ou la « supercavitation » présentent une teneur en gaz sensiblement constante sur une section donnée. Par conséquent la détection par le mesureur de phases d'une variation trop importante de la teneur en gaz peut être caractéristique de la présence d'un régime d'écoulement instable.

Dans certains modes de réalisation, la pompe basse pression est configurée en fonction d'un mode prédéterminé d'écoulement. Par exemple, la pompe basse pression peut être configurée pour des écoulements dont la teneur en gaz peut aller jusqu'à 45%. Dans ce cas, le fait de pouvoir détecter la présence de cavitation tourbillonnaire, et ainsi de modifier le régime d'écoulement, permet de maintenir la teneur en gaz de l'écoulement à des valeurs inférieures à 45%. Il n'est ainsi pas nécessaire d'utiliser une pompe basse pression surdimensionnée, configurée pour tous types d'écoulements. La masse totale du circuit d'alimentation peut ainsi être réduite.

Le présent exposé concerne également un circuit d'alimentation comportant au moins une pompe et une canalisation amont menant à la pompe, un mesureur de phases disposé dans la canalisation amont, un dispositif de réglage de débit et une unité de calcul, ladite unité de calcul étant configurée pour, lorsque la valeur de la teneur en gaz dans la canalisation amont est supérieure ou égale à une valeur seuil prédéterminée, commander le dispositif de réglage de débit de manière à modifier le débit de l'écoulement alimentant la pompe. Les avantages techniques liés à l'utilisation d'un tel circuit d'alimentation sont analogues à ceux liés au procédé de régulation d'un circuit d'alimentation décrit précédemment. Par ailleurs, les caractéristiques décrites en référence à ce procédé sont transposables, seules ou en combinaison, au circuit d'alimentation.

### BREVE DESCRIPTION DES DESSINS

L'invention et ses avantages seront mieux compris à la lecture de la description détaillée faite ci-après d'un exemple de réalisation de l'invention donnés à titre non limitatifs. Cette description fait référence aux figures annexées, sur lesquelles :
- la figure 1A représente, de manière modélisée, une canalisation dans laquelle s'écoule un fluide suivant un mode de cavitation par poches ;
- la figure 1B représente, de manière modélisée, une canalisation dans laquelle s'écoule un fluide suivant un mode de cavitation tourbillonnaire ;
- la figure 1C représente, de manière modélisée, une canalisation dans laquelle s'écoule un fluide suivant un mode de supercavitation ;
- la figure 2 représente un aéronef comportant un circuit d'alimentation selon le présent exposé ;
- la figure 3 représente schématiquement un tel circuit d'alimentation ;
- la figure 4 représente un mesureur de phases.

### DESCRIPTION DETAILLEE D'EXEMPLES DE REALISATION

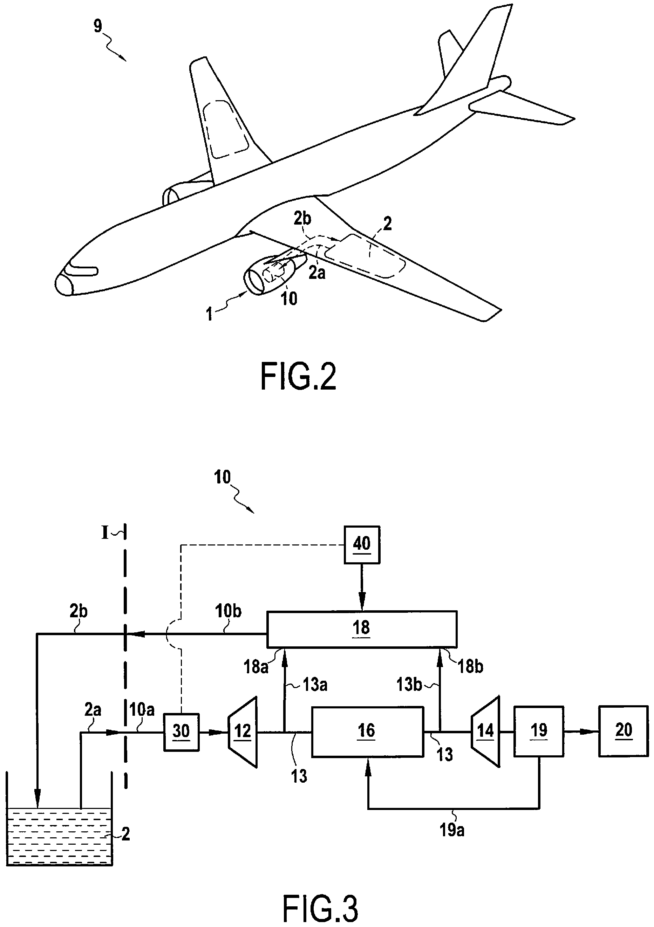

La figure 2 représente un aéronef 9 comportant un moteur 1 et un réservoir 2 disposé dans une aile de l'aéronef 9. Le moteur 1 comporte un circuit d'alimentation 10, ce dernier étant alimenté par le carburant prélevé dans le réservoir 2. Au cours de son trajet depuis le réservoir 2 jusqu'au moteur 1, le carburant s'écoule tout d'abord dans une première conduite de réservoir 2a issue du réservoir 2 et appartenant à l'aéronef 9, puis dans une conduite 10a appartenant au circuit d'alimentation 10 du moteur 1. La jonction entre ces deux conduites 2a et 10a constitue une interface I entre l'aéronef 9 et le moteur 1.

Le circuit d'alimentation 10 est représenté schématiquement sur la figure 3. Il comporte un équipement de pompage permettant de pressuriser le carburant avant son alimentation dans la chambre de combustion 20. Cet équipement de pompage comporte une première pompe 12 (pompe basse pression), et une deuxième pompe 14 (pompe haute pression). Les flèches sur la figure 3 représentent le sens d'écoulement du carburant. La conduite 10a est une canalisation amont, dans laquelle circule le carburant provenant du réservoir 2, et menant à la première pompe 12. La première pompe 12 débouche sur une canalisation aval 13, dans laquelle circule le carburant jusqu'à la deuxième pompe 14, à laquelle la canalisation aval 13 est connectée. Le carburant sortant de la deuxième pompe 14 est ensuite alimenté dans un doseur 19, puis dans la chambre de combustion 20 du moteur 1. Un échangeur de chaleur 16 est disposé sur la canalisation aval 13, entre la première pompe 12 et la deuxième pompe 14. Il permet de réguler la température de l'écoulement en échangeant de la chaleur entre le fluide s'écoulant dans la canalisation aval 13, et le fluide prélevé par le doseur 19 en aval de la deuxième pompe 14, et acheminé jusqu'à l'échangeur de chaleur 16 par l'intermédiaire d'une canalisation de dosage 19a.

Le circuit d'alimentation 10 comporte en outre un premier canal de dérivation 13a, et un deuxième canal de dérivation 13b. Le premier et le deuxième canal de dérivation 13a et 13b permettent de prélever une certaine quantité de carburant dans la canalisation aval 13. Le premier canal de dérivation 13a est branché en dérivation sur la canalisation aval 13, entre la première pompe 12 et l'échangeur de chaleur 16. Le deuxième canal de dérivation 13b est branché en dérivation sur la canalisation aval 13, entre l'échangeur de chaleur 16 et la deuxième pompe 14.

Un dispositif de prélèvement 18 est prévu sur les premier et deuxième canaux de dérivation 13a et 13b. Le dispositif de prélèvement 18 comporte une première vanne de prélèvement 18a prévue sur le premier canal de dérivation 13a, et une deuxième vanne de prélèvement 18b prévue sur le deuxième canal de dérivation 13b. Le degré d'ouverture des vannes de prélèvement 18a et 18b permet de réguler la quantité de carburant s'écoulant dans le premier et le deuxième canal de dérivation 13a et 13b, et donc la quantité de fluide prélevé dans la canalisation aval 13. Le dispositif de prélèvement 18 est également connecté à une canalisation de retour 10b, dans laquelle circule le carburant ayant été prélevé dans la canalisation aval 13, en direction du réservoir 2. La canalisation de retour 10b est elle-même connectée à une deuxième conduite de réservoir 2b, au niveau de l'interface I. Le carburant provenant du circuit d'alimentation 10 circule jusqu'au réservoir 2 par l'intermédiaire de cette deuxième conduite de réservoir 2b.

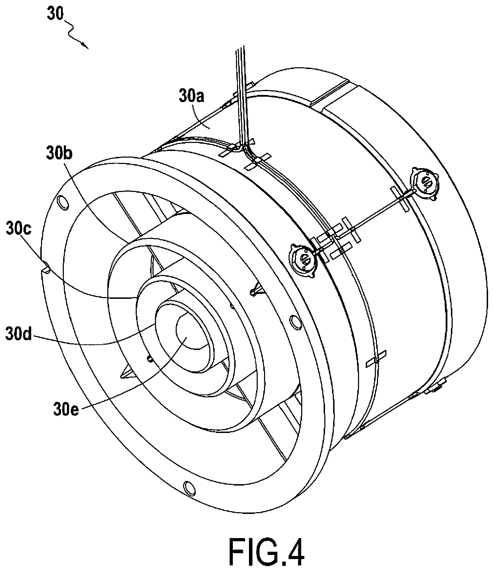

Un mesureur de phases 30 est disposé dans la canalisation amont 10a, en aval de l'interface I. Comme cela est représenté sur la figure 4, le mesureur de phase 30 comporte une enveloppe cylindrique 30a, à l'intérieur de laquelle est disposée une pluralité d'électrodes 30b, 30c, 30d, 30e cylindriques et concentriques entre elles et avec l'enveloppe cylindrique 30a. Le fluide s'écoulant dans la canalisation amont 10a s'écoule à l'intérieur du mesureur de phases 30, le long de ces électrodes. Les électrodes permettent de mesurer une capacité électrique dont la valeur est représentative de la teneur en gaz du fluide s'écoulant dans le mesureur de phases 30.

Une unité de calcul 40 est connectée au mesureur de phases 30 et au dispositif de prélèvement 18. L'unité de commande 40 peut être de type FADEC (pour « Full Authority Digital Engine Control » en anglais). La teneur en gaz du fluide s'écoulant dans la canalisation amont 10a, mesurée par le mesureur de phases 30, est transmise à l'unité de calcul 40. En fonction de cette valeur de la teneur en gaz, l'unité de calcul 40 commande un degré d'ouverture des première et deuxième vannes de prélèvement 18a, 18b, selon le procédé décrit ci-dessous.

Une valeur seuil de la teneur en gaz, caractéristique de l'apparition d'un régime de cavitation tourbillonnaire, est prédéterminée. Dans cet exemple, la valeur seuil prédéterminée correspond à une teneur en gaz de 10%. Lorsque l'unité de calcul 40 détermine qu'une valeur de la teneur en gaz dans la canalisation amont 10a, mesurée par le mesureur de phases 30, est supérieure à la valeur seuil prédéterminée, l'unité de calcul 40 en déduit la présence d'un régime de cavitation tourbillonnaire dans la canalisation aval 13, et commande par conséquent un degré d'ouverture des première et deuxième vannes de prélèvement 18a, 18b.

Dans l'exemple ci-dessus, l'existence d'une valeur seuil prédéterminée permet de déduire la présence d'un régime de cavitation tourbillonnaire. Toutefois, d'autres moyens peuvent être mis en œuvre. Par exemple, la détection d'un régime de cavitation tourbillonnaire dans la canalisation aval 13, peut être caractérisée lorsque le mesureur de phases 30 mesure une variation d'au moins 5% de la teneur en gaz en moins de 1 seconde.

La fermeture partielle des première et deuxième vannes de prélèvement 18a et 18b, permet de diminuer la quantité de carburant prélevée dans la canalisation aval 13 par l'intermédiaire des premier et deuxième canaux de dérivation 13a et 13b. Cette diminution de la quantité de carburant prélevée dans la canalisation aval 13 engendre une augmentation du débit d'écoulement de carburant dans la canalisation amont 10a.

A ce sujet, les fabricants de pompes principales en aéronautique font souvent l'hypothèse que toute la quantité de gaz a été compressée lors du passage par les aubages de l'inducteur et le rouet (première pompe 12 dans cet exemple). Or ceci peut ne pas être le cas, car des traces de cavitation peuvent être retrouvées sur l'étage HP des pompes principales (deuxième pompe 14 dans cet exemple). Ceci indique qu'une certaine quantité de gaz se trouve non-comprimée à la sortie de la première pompe 12 et par conséquent elle se retrouve dans la canalisation aval 13. Ceci est encore plus vrai, car la « supercavitation » est considérée comme un état de saturation en teneur de gaz et comme mentionné ci-dessus, la proportion totale volumique de la phase gazeuse dans l'ensemble du fluide sur une portion de la canalisation augmente encore plus. De ce fait la masse totale du fluide dans la canalisation est pondérée par les masses de la phase liquide et la phase gazeuse, respectivement. Le volume de la canalisation reste constant dans une configuration de moteur, donc la masse totale du fluide est pondérée par les masses volumiques de chacune des phases. La masse volumique de kérosène à température ambiante est de l'ordre de 780 kg/m3 et celle de sa vapeur est de l'ordre de 4,5 kg/m3, ce qui donne un rapport d'environ de 170 entre les deux valeurs, sachant que la teneur en gaz acceptable selon la norme ARP492C de la pompe basse pression (première pompe 12 dans cet exemple) est de 45%. D'autre part, le besoin en débit massique de la première pompe dans un régime de rotation, altitude et température, reste constant. De plus, il est impossible de filtrer le fluide prélevé dans la canalisation aval 13, ce qui implique le retour d'un écoulement diphasique vers le réservoir 2 et par conséquent, la diminution de la masse totale du fluide en amont de la deuxième pompe 14. Le mélange diphasique qui se retrouve dans le réservoir 2 est, ainsi, aspiré à nouveau par la première pompe 12. Pour cela le dispositif de prélèvement 18 doit être dans sa nouvelle position, afin de limiter l'écoulement diphasique prélevé. Un autre effet présent dans les systèmes carburants est l'augmentation de la température de kérosène du fait de la compressibilité suite au passage du liquide dans la première pompe 12. Plus précisément, la température du débit retourné au réservoir 2 est pondérée par un mélange de carburant « chaud », avec du carburant « froid ». La présence de gaz à la sortie de la première pompe 12, diminue la quantité de liquide présent, ce qui fait augmenter la température moyenne de carburant prélevé. Par conséquent, le retour dans le réservoir 2 résulte également dans une augmentation de la température moyenne de carburant. Or cette augmentation a un effet bénéfique car la cavitation est retardée, à cause de la chaleur latente du fluide, car il s'agit d'un phénomène endothermique (la transformation du liquide en vapeur consomme de l'énergie et elle est prélevée au liquide créant un refroidissement local dans la poche constituée de liquide-vapeur). Dans le cas du kérosène, la pression de vapeur saturante augmente à une température plus importante, ce qui retarde l'apparition de la cavitation. Par conséquent, la première pompe 12 va aspirer plus de liquide que de mélange diphasique.

Dans l'exemple présent, l'unité de commande 40 commande un degré d'ouverture des première et deuxième vannes de prélèvement 18a, 18b permettant une augmentation de débit de 5% dans la canalisation amont 10a. Cette augmentation de débit permet de passer d'un mode de cavitation tourbillonnaire dans la canalisation amont 10a (représenté sur la figure 1B), à un mode de « supercavitation » (représenté sur la figure 1C). On entend par « supercavitation » un mode d'écoulement, plus stable et plus régulier, et plus favorable au bon fonctionnement de la première pompe 12 qu'un mode de cavitation tourbillonnaire et qui permet donc de réduire le risque d'endommagement de cette dernière.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. Par conséquent, la description et les dessins doivent être considérés dans un sens illustratif plutôt que restrictif.

Il est également évident que toutes les caractéristiques décrites en référence à un procédé sont transposables, seules ou en combinaison, à un dispositif, et inversement, toutes les caractéristiques décrites en référence à un dispositif sont transposables, seules ou en combinaison, à un procédé.

## Revendications

1. Procédé de régulation d'un circuit d'alimentation (10) comprenant au moins une première pompe (12) et une canalisation amont (10a) menant à la première pompe (12), **caractérisé en ce que** le procédé comporte des étapes de :
- détermination, dans la canalisation amont (10a), de la teneur en gaz d'un écoulement alimentant la première pompe (12) ;
- lorsque que la valeur de la teneur en gaz dans la canalisation amont (10a), déterminée à l'étape de détermination, est supérieure ou égale à une valeur seuil prédéterminée, modification du débit de l'écoulement alimentant la première pompe (12).

2. Procédé selon la revendication 1 dans lequel, lorsque que la valeur de la teneur en gaz déterminée à l'étape de détermination est supérieure ou égale à la valeur seuil prédéterminée, le débit de l'écoulement alimentant la première pompe (12) est augmenté de sorte à obtenir un régime de supercavitation dans la canalisation amont (10a).

3. Procédé selon la revendication 1 ou 2, dans lequel l'augmentation du débit de l'écoulement alimentant la première pompe (12) est supérieure à 2% et inférieure à 15%, de préférence supérieure à 2% et inférieure à 10%, de préférence encore supérieure à 2% et inférieure à 5%.

4. Procédé selon l'une quelconque des revendications 1 à 3, dans lequel le circuit d'alimentation (10) comprend une canalisation aval (13) en aval de la première pompe (12), et au moins un premier canal de dérivation (13a) connecté en dérivation de la canalisation aval (13) et permettant de prélever une certaine quantité de fluide dans la canalisation aval (13), et
dans lequel la modification du débit de l'écoulement alimentant la première pompe (12) est réalisée en modifiant une quantité de fluide prélevé dans la canalisation aval (13) au moins via le premier canal de dérivation (13a).

5. Procédé selon la revendication 4, dans lequel le débit de l'écoulement alimentant la première pompe (12) est augmenté en diminuant la quantité de fluide prélevé dans la canalisation aval (13) au moins via le premier canal de dérivation (13a).

6. Procédé selon l'une quelconque des revendications 1 à 5, dans lequel la détermination de la teneur en gaz de l'écoulement est effectuée par un mesureur de phases (30) apte à déterminer la teneur en gaz d'un écoulement diphasique, disposé dans la canalisation amont (10a).

7. Procédé selon l'une quelconque des revendications 1 à 6, dans lequel la valeur seuil prédéterminée de la teneur en gaz est comprise entre 50% et 80%.

8. Procédé selon la revendication 6, dans lequel la modification du débit de l'écoulement alimentant la première pompe (12) est effectuée lorsque le mesureur de phases (30) mesure une variation d'au moins 5%, de préférence 10%, de préférence encore 15%, dans la teneur en gaz en moins de 1 seconde.

9. Circuit d'alimentation (10) comportant au moins une pompe (12) et une canalisation amont (10a) menant à la pompe (12), un mesureur de phases (30) disposé dans la canalisation amont (10a), un dispositif de réglage de débit (18) et une unité de calcul (40), ladite unité de calcul (40) étant configurée pour, lorsqu'une valeur de la teneur en gaz mesurée par le mesureur de phases (30) dans la canalisation amont (10a) est supérieure ou égale à une valeur seuil prédéterminée, commander le dispositif de réglage de débit (18) de manière à modifier le débit de l'écoulement alimentant la pompe (12).

## Patentansprüche

1. Verfahren zur Regelung eines Versorgungskreises (10), umfassend wenigstens eine erste Pumpe (12) und eine stromaufwärtige Rohrleitung (10a), welche zu der ersten Pumpe (12) führt, **dadurch gekennzeichnet, dass** das Verfahren Schritte umfasst des:
- Bestimmens des Gasgehaltes eines die erste Pumpe (12) beaufschlagenden Stroms in der stromaufwärtigen Rohrleitung (10a),
- Änderns der Durchflussmenge des die erste Pumpe (12) beaufschlagenden Stroms, wenn der in dem Bestimmungsschritt bestimmte Wert des Gasgehaltes in der stromaufwärtigen Leitung (10a) größer als ein oder gleich einem vorbestimmten Schwellwert ist.

2. Verfahren nach Anspruch 1, bei dem dann, wenn der in dem Bestimmungsschritt bestimmte Wert des Gasgehaltes größer als der oder gleich dem vorbestimmten Schwellwert ist, die Durchflussmenge des die erste Pumpe (12) beaufschlagenden Stroms erhöht wird, um einen Superkavitationszustand in der stromaufwärtigen Rohrleitung (10a) zu erhalten.

3. Verfahren nach Anspruch 1 oder 2, bei dem die Erhöhung der Durchflussmenge des die erste Pumpe (12) beaufschlagenden Stroms größer als 2 % und kleiner als 15 %, vorzugsweise größer als 2 % und kleiner als 10 %, weiterhin vorzugsweise größer als 2 % und kleiner als 5 % ist.

4. Verfahren nach einem der Ansprüche 1 bis 3, bei dem der Versorgungskreis (10) eine stromabwärtige Rohrleitung (13) stromabwärts der ersten Pumpe (12) und wenigstens einen ersten Bypasskanal (13a) umfasst, der als Abzweig von der stromabwärtigen Rohrleitung (13) angeschlossen ist und ermöglicht, eine bestimmte Fluidmenge aus der stromabwärtigen Rohrleitung (13) zu entnehmen, und
bei dem die Änderung der Durchflussmenge des die erste Pumpe (12) beaufschlagenden Stroms dadurch vollzogen wird, dass eine Fluidmenge, welche aus der stromabwärtigen Rohrleitung (13) wenigstens über den ersten Bypasskanal (13a) entnommen wird, geändert wird.

5. Verfahren nach Anspruch 4, bei dem die Durchflussmenge des die erste Pumpe (12) beaufschlagenden Stroms dadurch erhöht wird, dass die aus der stromabwärtigen Rohrleitung (13) wenigstens über den ersten Bypasskanal (13a) entnommene Fluidmenge verringert wird.

6. Verfahren nach einem der Ansprüche 1 bis 5, bei dem die Bestimmung des Gasgehaltes des Stroms mit einem in der stromaufwärtigen Rohrleitung (10a) angeordneten Phasenmesser (30) durchgeführt wird, der geeignet ist, den Gasgehalt eines Zweiphasenstroms zu bestimmen.

7. Verfahren nach einem der Ansprüche 1 bis 6, bei dem der vorbestimmte Schwellwert des Gasgehaltes im Bereich zwischen 50 % und 80 % liegt.

8. Verfahren nach Anspruch 6, bei dem die Änderung der Durchflussmenge des die erste Pumpe (12) beaufschlagenden Stroms dann vollzogen wird, wenn der Phasenmesser (30) eine Schwankung von wenigstens 5 %, vorzugsweise 10 %, weiterhin vorzugsweise 15 %, in dem Gasgehalt in weniger als 1 Sekunde misst.

9. Versorgungskreis (10), umfassend wenigstens eine Pumpe (12) und eine stromaufwärtige Rohrleitung (10a), welche zu der Pumpe (12) führt, einen Phasenmesser (30), der in der stromaufwärtigen Rohrleitung (10a) angeordnet ist, eine Durchflussmengeneinstellvorrichtung (18) und eine Berechnungseinheit (40), wobei die Berechnungseinheit (40) dazu ausgelegt ist, wenn ein durch den Phasenmesser (30) in der stromaufwärtigen Rohrleitung (10a) gemessener Wert des Gasgehaltes größer als ein oder gleich einem vorbestimmten Schwellwert ist, die Durchflussmengeneinstellvorrichtung (18) so zu steuern, dass die Durchflussmenge des die Pumpe (12) beaufschlagenden Stroms geändert wird.

## Claims

1. A method of regulating a feed circuit (10) comprising at least a first pump (12) and an upstream duct (10a) leading to the first pump (12), the method being **characterized in that** it comprises the steps of:
- determining the gas content of a flow in the upstream duct (10a) feeding the first pump (12); and
- when the value of the gas content in the upstream duct (10a), as determined in the determining step, is greater than or equal to a predetermined threshold value, modifying the flow rate of the flow feeding the first pump (12).

2. A method according to claim 1, wherein, when the gas content value determined in the determining step is greater than or equal to the predetermined threshold value, the flow rate feeding the first pump (12) is increased so as to obtain supercavitation conditions in the upstream duct (10a).

3. A method according to claim 1 or claim 2, wherein the increase in the flow rate feeding the first pump (12) is greater than 2% and less than 15%, preferably greater than 2% and less than 10%, more preferably greater than 2% and less than 5%.

4. A method according to any one of claims 1 to 3, wherein the feed circuit (10) comprises a downstream duct (13) downstream from the first pump (12) and at least a first branch channel (13a) branching from the downstream duct (13) and enabling a certain quantity of fluid to be bled from the downstream duct (13), and wherein the modification of the flow rate of the flow feeding the first pump (12) is performed by modifying a quantity of fluid bled from the downstream duct (13) at least via the first branch channel (13a).

5. A method according to claim 4, wherein the flow rate of fluid feeding the first pump (12) is increased by decreasing the quantity of fluid bled from the downstream duct (13) at least via the first branch channel (13a).

6. A method according to any one of claims 1 to 5, wherein the gas content of the flow is determined by a phase measurement tool (30) suitable for determining the gas content of a two-phase flow and arranged in the upstream duct (10a).

7. A method according to any one of claims 1 to 6, wherein the predetermined threshold value for the gas content lies in the range 50% to 80%.

8. A method according to claim 6, wherein the modification of the flow rate of fluid feeding the first pump (12) is performed when the phase measurement tool (30) measures a variation of at least 5%, preferably 10%, more preferably 15% in the gas content, in less than 1 second.

9. A feed circuit (10) comprising at least a pump (12) and an upstream duct (10a) leading to the pump (12), a phase measurement tool (30) disposed in the upstream duct (10a), a flow rate adjustment device (18), and a calculation unit (40), said calculation unit (40) being configured, when a gas content value measured by the phase measurement tool (30) in the upstream duct (10a) is greater than or equal to a predetermined threshold value, to control the flow rate adjustment device (18) so as to modify the flow rate feeding the pump (12).
